# EUROPEAN PATENT SPECIFICATION

(11) **EP 3 783 691 B1**
(45) Date of publication and mention of the grant of the patent: **11.11.2026**
(21) Application number: 20804161.6
(22) Date of filing: 09.03.2020
(51) Int. Cl.: H01M 50/207, H01M 50/224, H01M 50/244

(54) **BATTERY MODULE AND MANUFACTURING METHOD THEREOF**
BATTERIEMODUL UND HERSTELLUNGSVERFAHREN DAFÜR
MODULE DE BATTERIE ET SON PROCÉDÉ DE FABRICATION

(30) Priority: 14.06.2019 KR 20190070976
(43) Date of publication of application: 24.02.2021
(73) Proprietor: LG Energy Solution, Ltd., Seoul 07335 (KR)
(72) Inventor: LEE, Youngho, Daejeon 34122 (KR); KIM, Sung Dae, Daejeon 34122 (KR); SEONG, Junyeob, Daejeon 34122 (KR); PARK, Junkyu, Daejeon 34122 (KR)
(74) Representative: Plasseraud IP
(86) International application number: PCT/KR2020/003225
(87) International publication number: WO 2020/251140

(56) References cited:
- EP-A1- 3 065 197
- WO-A1-2019/088625
- CN-A- 107 706 325
- CN-A- 107 706 325
- JP-A- 2019 075 281
- KR-A- 20170 040 638
- US-A1- 2016 141 566
- US-A1- 2019 131 596

## Description

### [TECHNICAL FIELD]

### Cross Citation with Related Application(s)

This application claims the benefit of Korean Patent Application No. 10-2019-0070976 filed on June 14, 2019 with the Korean Intellectual Property Office.

The present disclosure relates to a battery module and a method for manufacturing the same, and more particularly, to a battery module that simplifies the frame assembling process, and a method for manufacturing the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell, and to configure a battery pack by using at least one of the battery modules and adding other components.

The battery module includes a battery cell stack in which a plurality of battery cells are stacked, and a frame covering the battery cell stack to protect the battery cell stack.

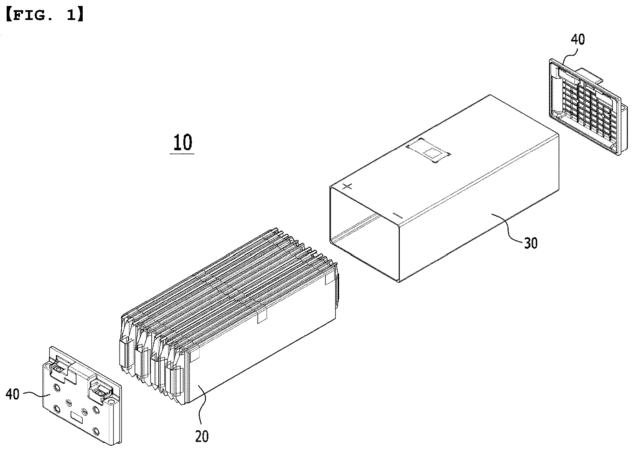

FIG. 1 is an exploded perspective view of a conventional battery module 10.

Referring to FIG.1, the battery module 10 includes a monoframe 30 in which a front surface and a rear surface are opened to accommodate a cell stack 20 in the interior space, and end plates 40 covering the front and rear surfaces of the monoframe 30.

However, in the case of such a monoframe 30, since the cell stack 20 is in the form of being horizontally assembled to the open front or rear surfaces of the monoframe 30, the height of the monoframe 30 should be designed high in consideration of the maximum height of the cell stack 20, the assembly tolerance in the insertion process, etc., and thus, an unnecessarily wasted space is inevitably generated.

Moreover, for the welding of a total of three or more frames, including the monoframe 30 and the two end plates 40, the concept of the welding jig becomes very important, and thus, there is a problem in that continuous management for the jig used during welding is needed.

In addition, when welding three or more frames as above, there may be a case where the gap condition required at the time of welding is not satisfied due to the cumulative tolerances between the frames. Therefore, it is necessary to perform tighter dimension management the frame, and at the same time, there is a problem that the time and cost associated therewith increase.

Further prior art is described in CN 107 706 325A; EP 3 065 197 A1 and US 2019/131596 A1.

### [DETAILED DESCRIPTION OF THE INVENTION]

### [TECHNICAL PROBLEM]

Therefore, it is an object of the present disclosure to provide a battery module that reduces the number of outer frame parts protecting a battery cell stack, simplifies the frame assembling process and thereby, improves the quality of the battery module, and a method for manufacturing the same.

Technical problems to be solved by the present disclosure are not limited to the aforementioned technical problem, and other technical problems, which are not mentioned above, may be clearly understood from the following descriptions by those skilled in the art to which the present disclosure pertains.

### [TECHNICAL SOLUTION]

According to the present invention, for realizing the above object, there is provided a battery module comprising: a battery cell stack in which a plurality of secondary battery cells of the pouch type are stacked, busbar frames being respectively disposed on the front and rear surfaces of the battery cell stack, the busbar frames each including a busbar and a cell connecting board, and formed by covering the front and rear surfaces of the battery cell stack so that electrode leads of the plurality of the secondary battery cells are electrically connected, a first frame covering a lower side surface and both side surfaces of the battery cell stack, and a second frame covering the upper side surface and the front and rear surfaces of the battery cell stack, and the second frame including an upper surface of the second frame and front and rear surfaces of the second frame, which are integrally formed through a press method, wherein the front and rear surfaces of the second frame are formed so as to correspond to the shape of the electrode leads of the plurality of the secondary battery cells and the busbar frames, wherein the upper surface of the second frame and the front and rear surfaces of the second frame are connected to each other via frame connecting parts, and the frame connecting parts are formed by two parts on each of the front and rear surfaces of the second frame, and are bent in a vertical direction to vertically connect the front and rear surfaces of the second frame and the upper surface of the second frame. The first frame and the second frame, when assembled and welded, form an outer frame structure of the battery cell stack.

According to the invention for realizing the above object, there is provided a method of manufacturing a battery module as described above, comprising the steps of: manufacturing a first frame formed with a lower surface and both side surfaces, manufacturing a second frame in which an upper surface and front and rear surfaces are integrally formed through a press method, coupling the first frame formed with a lower surface and both side surfaces to a battery cell stack, coupling the second frame formed with an upper side surface and front and rear surfaces to the battery cell stack with busbar frames respectively disposed on the front and rear surfaces of the battery cell stack, and welding the first frame and the second frame.

The first frame and the second frame may be formed of aluminum.

The first frame and the second frame may be formed of steel.

The upper surface of the second frame and the front and rear surfaces of the second frame are connected to each other via a frame connecting part.

The frame connecting parts are formed by two parts on each of the front and rear surfaces of the second frame, and formed to be bent in a vertical direction, thus vertically connecting the front and rear surfaces of the second frame and the upper surface of the second frame.

In the step of coupling the first frame and the second frame, the first frame and the second frame may be mutually coupled by welding.

In the step of coupling the first frame and the second frame, an edge formed in the second frame and an edge of the first frame meeting therewith can be mutually adhered by welding.

After the step of manufacturing the second frame, the method may further include a step of coupling a module mounting part for mounting the battery module to the second frame.

The module mounting part may be adhered by welding to the second frame.

In the step of manufacturing the second frame, a step of forming the front and rear surfaces of the second frame may be further included.

In the step of manufacturing the first frame and the step of manufacturing the second frame, the first and second frames may be formed of aluminum.

In the step of manufacturing the second frame, the frame connecting part formed in the second frame may be bent through a press method to form the upper surface and the front and rear surfaces of the second frame.

In the step of manufacturing the first frame and the step of manufacturing the second frame, the first and second frames may be formed of steel.

### [ADVANTAGEOUS EFFECTS]

The battery module and its manufacturing method according to one embodiment of the present disclosure reduce the number of outer frame parts protecting a battery cell stack to two of the first and second frames, simplifies the frame assembling process, and contributes to the quality improvement of the battery module due to the simplification of the assembling process.

The effects of the present invention are not limited to the effects mentioned above and additional other effects not described above will be clearly understood from the description of the appended claims by those skilled in the art.

### [BRIEF DESCRIPTION OF THE DRAWINGS]

FIG. 1 is an exploded perspective view of a conventional battery module.
FIG. 2 is an exploded perspective view showing two frames assembled to a battery cell stack according to one embodiment of the present disclosure.
FIG. 3 is a perspective view showing a state in which a battery cell stack is coupled to a first frame according to one embodiment of the present disclosure.
FIG. 4 is a perspective view showing a state in which a second frame is coupled to the assembly of FIG. 3.
FIG. 5 is a perspective view showing a state in which the assembling of the frames is completed by the coupling of FIG. 4.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, to help understand the present disclosure, the accompanying drawings are not illustrated based on actual scales, but parts of the constituent elements may be exaggerated in size.

As used herein, terms such as first, second, and the like may be used to describe various components, and the terms are used only to discriminate one component from another component.

Further, the terms used herein are used only to describe exemplary embodiments, and are not intended to limit the present disclosure. A singular expression includes a plural expression unless they have definitely opposite meanings in the context. It should be understood that the terms "comprise", "include", and "have" as used herein are intended to designate the presence of stated features, numbers, steps, constitutional elements, or combinations thereof, but it should be understood that they do not preclude a possibility of existence or addition of one or more other features, numbers, steps, constitutional elements, or combinations thereof.

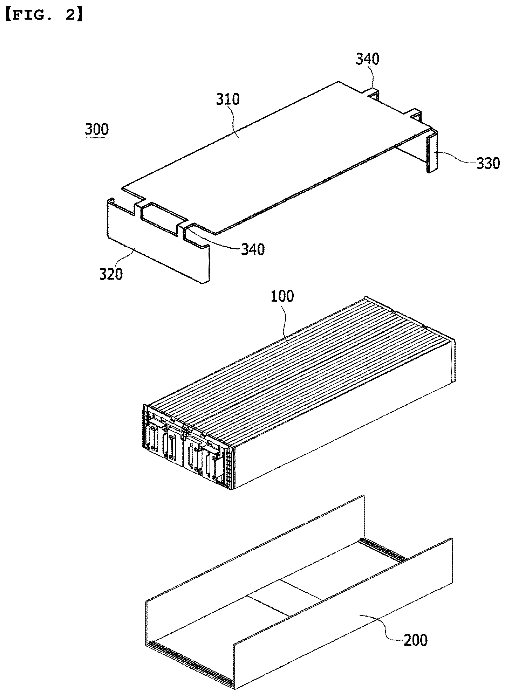

Hereinafter, a battery module according to one embodiment of the present disclosure will be described with reference to FIG. 2.

FIG. 2 is an exploded perspective view showing two frames assembled to a battery cell stack according to one embodiment of the present disclosure.

Referring FIG. 2, a battery module according to one embodiment of the present disclosure comprises: a battery cell stack in which a plurality of battery cells 100 are stacked, a first frame 200 in which a bottom surface and both side surfaces are formed to cover a lower surface and both side surfaces of the battery cell stack, and a second frame 300 which is formed on the upper surface and the front and rear surfaces to cover the upper side surface and the front and rear surfaces of the battery cell stack.

The battery cell 100 is a secondary battery, and is composed of a pouch-type secondary battery. Such battery cells 100 are configured of a plurality of cells, and the plurality of battery cells 100 are mutually stacked so as to be electrically connected to each other to form a battery cell stack. Each of the plurality of battery cells may include an electrode assembly, a battery case, and electrode leads protruding from the electrode assembly.

A busbar frame is formed on each of the front surface and the rear surface of the battery cell stack. The busbar frame includes a busbar and a cell connecting board, and is formed by covering the front and rear surfaces of the battery cell stack so that the electrode leads of the plurality of battery cells 100 are electrically connected.

The busbar frames respectively disposed on the front and rear surfaces of the battery cell stack may be electrically connected to each other through a flexible printed circuit board (FPCB) or a flexible flat cable (FFC). Information on the battery cell 100 sensed through FPCB or FFC in this way is transmitted to a battery management system (BMS), wherein in the battery management system, a plurality of battery cells 100 can be controlled and managed a plurality of battery cells 100 on the basis of information on the battery cells 100.

The first frame 200 is formed to cover the bottom surface and both side surfaces of the battery cell 100 stack. Therefore, the battery cell stack can be stably mounted on the first frame 200.

According to the present invention, the second frame 300 is configured such that the upper surface and the front and rear surfaces are integrally formed to cover the upper side surface and the front and rear surfaces of the battery cell stack.

Conventionally, in addition to an upper frame covering the upper side surface of the battery cell stack and a lower frame covering the lower side surface and both side surfaces of the battery cell stack, two end frames covering the front and rear surfaces of the battery cell stack are separately assembled. Therefore, when assembling the frames, there were disadvantages in that it is difficult to manage the tolerances for the axial directions of the three axes; the continuous management of the jig used during welding between the frames is needed; and the dimension management of the frame items is made difficult due to the cumulative tolerances between the frames.

However, the second frame 300 according to the present disclosure is configured such that the upper surface and the front and rear surfaces are integrally formed, thus covering the upper side surface and the front and rear surfaces of the battery cell stack at one time. In this way, the frame parts forming the outer periphery of the battery cell stack are unified into two types of the first and second frames 200 and 300, and thereby, the welding complexity is reduced, the time required for the assembling is reduced and the mass productivity of the product can be secured. In addition, because the welding line is reduced, the probability that defective products are generated due to defective welding is reduced, and the tolerance management site of the frame items is reduced, thereby improving the productivity of the product. Further, management of the product is facilitated due to the reduction in the unit of single item warehousing, and the effect of reducing the cost of the frame parts can also be obtained.

The second frame 300 includes an upper surface 310 of the second frame covering the upper side of the battery cell stack, a front surface 320 of the second frame covering the front direction of the battery cell stack, a rear surface 330 of the second frame covering the rear direction of the battery cell stack, and a frame connecting part 340 connecting the upper surface 310 of the second frame and the front and rear surfaces 320 and 330 of the second frame.

The second frame 300 is manufactured by a press method and may be formed of an aluminum material which can be easily manufactured by the press method. When being manufactured by the press method, pressure is applied to the frame connecting part 340 to bend the frame connecting part 340, and thereby, the front surface 320 of the second frame and the rear surface 330 of the second frame covering the front and rear directions of the battery cell stack can be formed perpendicularly to the upper surface 310 of the second frame so as to correspond to the shape of the battery cell stack.

In the past, the upper frame and the front and rear end frames were separately manufactured, wherein the upper frame was manufactured by an extrusion method, and the end frames were manufactured by a casting method. That is, the frames at each position were manufactured through different methods for each frame. However, in the second frame 300 according to the present disclosure, the upper surface and the front and rear surfaces are manufactured integrally through a press method, and thus, the manufacturing process can be simplified, the manufacturing process management is made easy, and the cost of the product due to the manufacture can be reduced.

In addition, in the past, since the end frame was manufactured by a casting method, the manufactured end frame was a structure having inevitably a certain level of thickness, whereas the second frame 300 of the present disclosure is manufactured by a press method, and thus, it is possible to manufacture the front and rear surfaces 320 and 330 of the second frame having a thickness thinner than the thickness of the end frame manufactured by the casting method. This makes it possible to reduce the volume of the battery module, and increase the energy density of the battery module, which can contribute to the improvement of the mounting property by making the battery module compact.

According to the conventional embodiment, when forming the end frame through the casting method, the basic thickness had to be usually 4.5 mm or more. However, in the second frame 300 according to one embodiment of the present disclosure, the thickness of the front and rear surfaces 320 and 330 of the second frame can allow to reduce to 2 mm through the press method.

Only, there is a problem that as the thickness of the frame becomes thin, the rigidity of the frame may be weakened. However, according to an embodiment of the present disclosure, the front and rear surfaces 320 and 330 of the second frame are additionally formed so as to correspond to the shape of the electrode lead and busbar frame which are formed on the front and rear surfaces of the battery cell stack, whereby through the forming operation, the rigidity required for the front and rear surfaces 320 and 330 of the second frame can be secured.

The pressed product has a tendency to bend and warp due to its own weight and external loads, and beads are applied to suppress such unintended deformation and reinforce rigidity. The forming is to provide a shape like the beads, and through the forming, a bead-like shape is implemented on the front and rear surfaces of the second frame 320 and 330 to secure rigidity, and at the same time, the bent part formed through the forming and the uneven part of the busbar frame correspond to each other, so that the busbar frame and the battery cell stack can be stably mounted on the second frame 300.

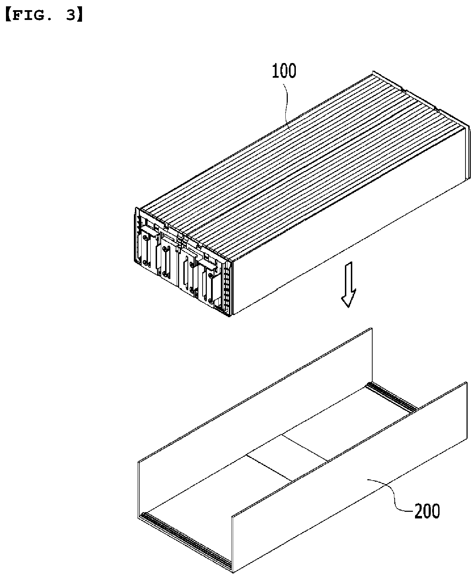

Hereinafter, a method of manufacturing a battery module according to one embodiment of the present disclosure will be described with reference to FIGS. 3 to 5.

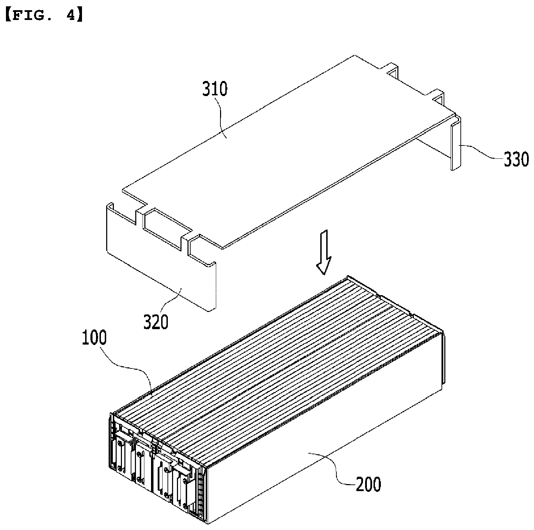

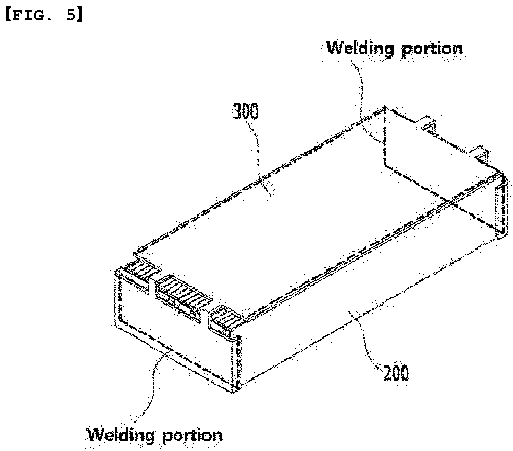

FIG. 3 is a perspective view showing a state in which a battery cell stack is coupled to a first frame according to one embodiment of the present disclosure. FIG. 4 is a perspective view showing a state in which a second frame is coupled to the assembly of FIG. 3. FIG. 5 is a perspective view showing a state in which the assembling of the frames is completed by the coupling of FIG. 4.

Referring to FIGS. 3 to 5, a method of manufacturing a battery module according to one embodiment of the present disclosure performs sequentially the steps of: manufacturing a first frame 200, manufacturing a second frame 300 through a press method, coupling a first frame 200 to a battery cell stack, coupling a second frame 300 to the battery cell stack, and coupling the first frame 200 and the second frame 300.

After the step of manufacturing the second frame 300, a step of coupling a module mounting parts for mounting the battery module to the second frame 300 may be further included. In this case, the module mounting parts may be adhered by welding to the upper surface 310 of the second frame 300. The module mounting parts may be welded and coupled to the front and rear sides of the upper surface 310 of the second frame to manufacture an integral-type second frame 300 formed on the upper surface and the front and rear surfaces, which can be coupled to a battery cell stack to assemble a battery module. The module mounting parts can be simply manufactured as one type of common shape which can be applied to all mounting through extrusion or processing, etc.

In the step of coupling the first frame 200 and the second frame 300, the first frame 200 and the second frame 300 is mutually adhered by welding. More specifically, as shown in FIG. 5, three edges formed on the front surface 320 of the second frame 300 and the first frame 200 may be mutually adhered by welding at the portions where they meet with each other; and three edges formed on the rear surface 330 of the second frame 300 and the first frame 200 may also be mutually adhered by welding at the portions where they meet with each other.

In the past, the outer structure of the battery cell stack was formed through a lower frame covering the lower side surface and both side surfaces of the battery cell stack, an upper frame covering the upper side surface of the battery cell stack, and end plates covering each of the front and rear surfaces of the battery cell stack, but when welding and assembling the frames having the frame structure as above, three or more parts are gathered and adhered at one vertex, and, therefore, precise welding in the vicinity of a vertex may be made difficult, and since welding was performed in all three axial directions, it is difficult to manage the tolerances of parts for each axial direction at one time.

In addition, for the welding of three or more frames, continuous management of the welding jig was involved, and there was a problem that due to the cumulative tolerance between multiple frames, the gap conditions required during the welding may not be satisfied, and thus, the dimension management s of the frame parts may be made difficult.

However, according to one embodiment of the present disclosure, when assembling the frames, the outer frame structure of the battery cell stack is completed by welding only a total of six edges including three edges of the second frame front surface 320 and three edges of the second frame rear surface 330, and thus, the number of welding between the frames can be reduced compared to the prior art. Further, since the battery module frame structure can be formed of only the two frames of the first and second frames 200 and 300, the frame part management in the manufacturing process is facilitated. In addition, due the reduction in the volume line, it can be easy to satisfy the gap condition between parts required during the welding due to tolerance.

Both the first frame 200 and the second frame 300 may be formed of aluminum. The first frame 200 and the second frame 300 may also be formed of steel.

The battery module as described above may be included in a battery pack. The battery pack may have a structure packed by adding a battery management system (BMS) and a cooling device, etc. which gather one or more of the battery modules according to the present embodiment and manage the temperature or voltage of the battery, etc.

The battery pack comprising the same can be applied to various devices. Such a device may be applied to a vehicle such as an electric bicycle, an electric vehicle, or a hybrid vehicle, but the present disclosure is not limited thereto, and can be applied to various devices capable of using a battery module, which also belongs to the scope of the present disclosure.

### [DESCRIPTION OF REFERENCE NUMERALS]

100: battery cell
200: first frame
300: second frame
310: upper side surface of the second frame
320: front surface of the second frame
330: rear surface of the second frame
340: frame connecting part

## Claims

1. A battery module comprising:
a battery cell stack in which a plurality of secondary battery cells (100) of the pouch type are stacked;
busbar frames being respectively disposed on the front and rear surfaces of the battery cell stack, the busbar frames each including a busbar and a cell connecting board, and formed by covering the front and rear surfaces of the battery cell stack so that electrode leads of the plurality of the secondary battery cells (100) are electrically connected,
a first frame (200) covering a lower side surface and both side surfaces of the battery cell stack, and
a second frame (300) covering an upper side surface and the front and rear surfaces of the battery cell stack, and the second frame (300) including an upper surface (310) of the second frame (300) and front and rear surfaces (320, 330) of the second frame (300), which are integrally formed through a press method,
wherein the front and rear surfaces (320, 330) of the second frame (300) are formed so as to correspond to the shape of the electrode leads of the plurality of the secondary battery cells (100) and the busbar frames,
wherein the upper surface (310) of the second frame (300) and the front and rear surfaces (320, 330) of the second frame (300) are connected to each other via frame connecting parts (340), and the frame connecting parts (340) are formed by two parts on each of the front and rear surfaces (320, 330) of the second frame (300), and are bent in a vertical direction to vertically connect the front and rear surfaces (320, 330) of the second frame (300) and the upper surface (310) of the second frame (300),
wherein the first frame (200) and the second frame (300), when assembled and welded, form an outer frame structure of the battery cell stack.

2. The battery module of claim 1, wherein the first frame (200) and the second frame (300) are formed of aluminum.

3. The battery module of claim 1, wherein the first frame (200) and the second frame (300) are formed of steel.

4. A method of manufacturing a battery module according to any one of claims 1 to 3 comprising the steps of:
manufacturing a first frame (200) formed with a lower surface and both side surfaces,
manufacturing a second frame (300) in which an upper surface (310) and front and rear surfaces (320, 330) are integrally formed through a press method,
coupling the first frame (200) formed with a lower surface and both side surfaces to a battery cell stack,
coupling the second frame (300) formed with the upper surface and front and rear surfaces to the battery cell stack with busbar frames respectively disposed on the front and rear surfaces of the battery cell stack, and
welding the first frame (200) and the second frame (300).

5. The method of claim 4, wherein in the step of coupling the first frame (200) and the second frame (300), an edge formed in the second frame (300) and an edge of the first frame (200) meeting the former edge are adhered to each other by welding.

6. The method of claim 4, wherein in the step of manufacturing the second frame (300), the step of forming the front and rear surfaces (320, 330) of the second frame (300) is further included.

7. The method of claim 4, wherein in the step of manufacturing the first frame (200) and the step of manufacturing the second frame (300), the first and second frames (200, 300) are formed of aluminum.

8. The method of claim 4, wherein in the step of manufacturing the second frame (300), the frame connecting part (340) formed in the second frame (300) is bent through a press method to form the upper surface (310) and the front and rear surfaces (320, 330) of the second frame (300).

9. The method of claim 4, wherein in the step of manufacturing the first frame (200) and the step of manufacturing the second frame (300), the first and second frames (200, 300) are formed of steel.

10. A battery pack comprising the battery module according to claim 1.

## Patentansprüche

1. Batteriemodul, umfassend:
einen Batteriezellenstapel, in dem eine Vielzahl von Sekundärbatteriezellen (100) des Pouch-Typs gestapelt sind;
Sammelschienenrahmen, die jeweils auf der vorderen und der hinteren Oberfläche des Batteriezellenstapels angeordnet sind, wobei die Sammelschienenrahmen jeweils eine Sammelschiene und eine Zellenverbindungsplatine enthalten und durch Abdecken der vorderen und der hinteren Oberfläche des Batteriezellenstapels gebildet sind, so dass Elektrodenleitungen der Vielzahl der Sekundärbatteriezellen (100) elektrisch verbunden sind,
einen ersten Rahmen (200), der eine untere Seitenfläche und beide Seitenflächen des Batteriezellenstapels abdeckt, und
einen zweiten Rahmen (300), der eine obere Seitenfläche und die vordere und die hintere Oberfläche des Batteriezellenstapels abdeckt, und der zweite Rahmen (300) eine obere Oberfläche (310) des zweiten Rahmens (300) und eine vordere und eine hintere Oberfläche (320, 330) des zweiten Rahmens (300) enthält, die durch ein Pressverfahren einstückig ausgebildet sind,
wobei die vordere und die hintere Oberfläche (320, 330) des zweiten Rahmens (300) so ausgebildet sind, dass sie der Form der Elektrodenleitungen der Vielzahl der Sekundärbatteriezellen (100) und der Sammelschienenrahmen entsprechen,
wobei die obere Oberfläche (310) des zweiten Rahmens (300) und die vordere und die hintere Oberfläche (320, 330) des zweiten Rahmens (300) über Rahmenverbindungsteile (340) miteinander verbunden sind, und die Rahmenverbindungsteile (340) durch zwei Teile an jeder der vorderen und der hinteren Oberfläche (320, 330) des zweiten Rahmens (300) gebildet sind und in einer vertikalen Richtung gebogen sind, um die vordere und die hintere Oberfläche (320, 330) des zweiten Rahmens (300) und die obere Oberfläche (310) des zweiten Rahmens (300) vertikal zu verbinden,
wobei der erste Rahmen (200) und der zweite Rahmen (300), wenn sie zusammengebaut und verschweißt sind, eine äußere Rahmenstruktur des Batteriezellenstapels bilden.

2. Batteriemodul nach Anspruch 1, wobei der erste Rahmen (200) und der zweite Rahmen (300) aus Aluminium gebildet sind.

3. Batteriemodul nach Anspruch 1, wobei der erste Rahmen (200) und der zweite Rahmen (300) aus Stahl gebildet sind.

4. Verfahren zur Herstellung eines Batteriemoduls nach einem der Ansprüche 1 bis 3, umfassend die folgenden Schritte:
Herstellen eines ersten Rahmens (200), der mit einer unteren Oberfläche und beiden Seitenflächen ausgebildet ist,
Herstellen eines zweiten Rahmens (300), bei dem eine obere Oberfläche (310) und eine vordere und eine hintere Oberfläche (320, 330) durch ein Pressverfahren einstückig ausgebildet werden,
Koppeln des ersten Rahmens (200), der mit einer unteren Oberfläche und beiden Seitenflächen ausgebildet ist, mit einem Batteriezellenstapel,
Koppeln des zweiten Rahmens (300), der mit der oberen Oberfläche und der vorderen und der hinteren Oberfläche ausgebildet ist, mit dem Batteriezellenstapel mit Sammelschienenrahmen, die jeweils auf der vorderen und der hinteren Oberfläche des Batteriezellenstapels angeordnet sind, und
Verschweißen des ersten Rahmens (200) und des zweiten Rahmens (300).

5. Verfahren nach Anspruch 4, wobei in dem Schritt des Koppelns des ersten Rahmens (200) und des zweiten Rahmens (300) eine in dem zweiten Rahmen (300) ausgebildete Kante und eine Kante des ersten Rahmens (200), die auf die erstgenannte Kante trifft, durch Schweißen miteinander verbunden werden.

6. Verfahren nach Anspruch 4, wobei in dem Schritt des Herstellens des zweiten Rahmens (300) der Schritt des Ausbildens der vorderen und der hinteren Oberfläche (320, 330) des zweiten Rahmens (300) ferner enthalten ist.

7. Verfahren nach Anspruch 4, wobei in dem Schritt des Herstellens des ersten Rahmens (200) und dem Schritt des Herstellens des zweiten Rahmens (300) der erste und der zweite Rahmen (200, 300) aus Aluminium gebildet werden.

8. Verfahren nach Anspruch 4, wobei in dem Schritt des Herstellens des zweiten Rahmens (300) das in dem zweiten Rahmen (300) ausgebildete Rahmenverbindungsteil (340) durch ein Pressverfahren gebogen wird, um die obere Oberfläche (310) und die vordere und die hintere Oberfläche (320, 330) des zweiten Rahmens (300) zu bilden.

9. Verfahren nach Anspruch 4, wobei in dem Schritt des Herstellens des ersten Rahmens (200) und dem Schritt des Herstellens des zweiten Rahmens (300) der erste und der zweite Rahmen (200, 300) aus Stahl gebildet werden.

10. Batteriepack, umfassend das Batteriemodul nach Anspruch 1.

## Revendications

1. Module de batterie comprenant :
un empilement de cellules de batterie dans lequel une pluralité de cellules de batterie secondaire (100) de type poche sont empilées ;
des cadres de barres omnibus étant respectivement disposés sur les surfaces avant et arrière de l'empilement de cellules de batterie, les cadres de barres omnibus incluant chacun une barre omnibus et une carte de connexion de cellules, et formés en recouvrant les surfaces avant et arrière de l'empilement de cellules de batterie de sorte que les bornes d'électrode de la pluralité de cellules de batterie secondaire (100) soient connectées électriquement,
un premier cadre (200) recouvrant une surface inférieure et les deux surfaces latérales de l'empilement de cellules de batterie, et
un second cadre (300) recouvrant une surface supérieure et les surfaces avant et arrière de l'empilement de cellules de batterie, et le second cadre (300) incluant une surface supérieure (310) du second cadre (300) et des surfaces avant et arrière (320, 330) du second cadre (300), qui sont formées d'un seul bloc par un procédé de pressage,
dans lequel les surfaces avant et arrière (320, 330) du second cadre (300) sont formées de manière à correspondre à la forme des bornes d'électrode de la pluralité de cellules de batterie secondaire (100) et des cadres de barres omnibus,
dans lequel la surface supérieure (310) du second cadre (300) et les surfaces avant et arrière (320, 330) du second cadre (300) sont connectées l'une à l'autre via des parties de connexion de cadre (340), et les parties de connexion de cadre (340) sont formées par deux parties sur chacune des surfaces avant et arrière (320, 330) du second cadre (300), et sont pliées dans une direction verticale pour connecter verticalement les surfaces avant et arrière (320, 330) du second cadre (300) et la surface supérieure (310) du second cadre (300),
dans lequel le premier cadre (200) et le second cadre (300), lorsqu'ils sont assemblés et soudés, forment une structure de cadre extérieure de l'empilement de cellules de batterie.

2. Module de batterie selon la revendication 1, dans lequel le premier cadre (200) et le second cadre (300) sont formés d'aluminium.

3. Module de batterie selon la revendication 1, dans lequel le premier cadre (200) et le second cadre (300) sont formés d'acier.

4. Procédé de fabrication d'un module de batterie selon l'une quelconque des revendications 1 à 3 comprenant les étapes consistant à :
fabriquer un premier cadre (200) formé avec une surface inférieure et les deux surfaces latérales,
fabriquer un second cadre (300) dans lequel une surface supérieure (310) et des surfaces avant et arrière (320, 330) sont formées d'un seul bloc par un procédé de pressage,
coupler le premier cadre (200) formé avec une surface inférieure et les deux surfaces latérales à un empilement de cellules de batterie,
coupler le second cadre (300) formé avec la surface supérieure et les surfaces avant et arrière à l'empilement de cellules de batterie, avec des cadres de barres omnibus disposés respectivement sur les surfaces avant et arrière de l'empilement de cellules de batterie, et
souder le premier cadre (200) et le second cadre (300).

5. Procédé selon la revendication 4, dans lequel à l'étape de couplage du premier cadre (200) et du second cadre (300), un bord formé dans le second cadre (300) et un bord du premier cadre (200) rejoignant le premier bord sont fixés l'un à l'autre par soudage.

6. Procédé selon la revendication 4, dans lequel à l'étape de fabrication du second cadre (300), l'étape de formation des surfaces avant et arrière (320, 330) du second cadre (300) est en outre incluse.

7. Procédé selon la revendication 4, dans lequel lors de l'étape de fabrication du premier cadre (200) et lors de l'étape de fabrication du second cadre (300), les premier et second cadres (200, 300) sont formés d'aluminium.

8. Procédé selon la revendication 4, dans lequel à l'étape de fabrication du second cadre (300), la partie de connexion de cadre (340) formée dans le second cadre (300) est pliée par un procédé de pressage pour former la surface supérieure (310) et les surfaces avant et arrière (320, 330) du second cadre (300).

9. Procédé selon la revendication 4, dans lequel lors de l'étape de fabrication du premier cadre (200) et lors de l'étape de fabrication du second cadre (300), les premier et second cadres (200, 300) sont formés d'acier.

10. Bloc-batterie comprenant le module de batterie selon la revendication 1.
